# FASCICULE DE BREVET EUROPEEN

(11) **EP 3 380 294 B1**
(45) Date de publication et mention de la délivrance du brevet: **08.07.2020**
(21) Numéro de dépôt: 16815580.2
(22) Date de dépôt: 17.11.2016
(51) Int. Cl.: B29C 33/30

(54) **MOULE POUR LA FABRICATION D'UN CARTER DE SOUFFLANTE DE TURBINE A GAZ EN MATERIAU COMPOSITE ET PROCEDE DE FERMETURE D'UN TEL MOULE**
FORM ZUR HERSTELLUNG EINES AUS VERBUNDSTOFFMATERIAL HERGESTELLTEN GASTURBINENGEBLÄSEGEHÄUSES UND VERFAHREN ZUM SCHLIESSEN SOLCH EINER FORM
MOULD FOR THE MANUFACTURE OF A GAS TURBINE FAN CASING MADE OF COMPOSITE MATERIAL AND METHOD FOR CLOSING SUCH A MOULD

(30) Priorité: 26.11.2015 FR 1561396
(43) Date de publication de la demande: 03.10.2018
(73) Titulaire: Safran Aircraft Engines, 75015 Paris (FR)
(72) Inventeur: MATHON, Richard, 77550 Moissy-Cramayel Cedex (FR); JAUSSAUD, Raoul, 77550 Moissy-Cramayel Cedex (FR); MAGNAUDEIX, Dominique Michel Serge, 77550 Moissy-Cramayel Cedex (FR)
(74) Mandataire: Cabinet Beau de Loménie
(86) Numéro de dépôt international: PCT/FR2016/052987
(87) Numéro de publication internationale: WO 2017/089680

(56) Documents cités:
- WO-A1-2014/131992
- FR-A1- 2 957 093

## Description

### Arrière-plan de l'invention

La présente invention se rapporte au domaine général de la fabrication des carters de turbine à gaz, et plus particulièrement des carters de rétention pour soufflante de turbine à gaz pour moteur aéronautique.

Dans un moteur aéronautique à turbine à gaz, un carter de soufflante remplit plusieurs fonctions. Il définit la veine d'entrée d'air dans le moteur, supporte un matériau abradable en regard du sommet des aubes de la soufflante, supporte une structure éventuelle d'absorption d'ondes sonores pour le traitement acoustique en entrée du moteur et incorpore ou supporte un bouclier de rétention. Ce dernier constitue un piège retenant les débris, tels que les objets ingérés ou des fragments d'aubes endommagées, projetés par la centrifugation, afin d'éviter qu'ils traversent le carter et atteignent d'autres parties de l'aéronef.

La réalisation d'un carter de soufflante en matériau composite a déjà été proposée. On pourra par exemple se référer au document EP 1,961,923 qui décrit la fabrication d'un carter en matériau composite à épaisseur évolutive comprenant la formation d'une préforme fibreuse par des couches superposées d'une texture fibreuse et la densification du renfort fibreux par une matrice. Plus précisément, ce document prévoit d'utiliser un mandrin d'appel pour le tissage tridimensionnel de la texture fibreuse, celle-ci étant ensuite enroulée en couches superposées sur un mandrin d'imprégnation présentant une surface extérieure dont le profil correspond à celui de la partie centrale du carter à fabriquer et deux flasque latéraux correspondant à des brides de fixation du carter. La préforme fibreuse est maintenue sur le mandrin d'imprégnation et une imprégnation par résine est réalisée avant polymérisation.

Pour réaliser l'imprégnation de la préforme fibreuse par un procédé d'injection de type RTM, il est connu de venir positionner les éléments d'un contre-moule sur le mandrin d'imprégnation et former ainsi un moule d'injection. On pourra par exemple se référer au document WO 2013/060978 qui divulgue la mise en place de secteurs angulaires pour fermer le moule d'injection de résine sur le mandrin d'imprégnation. Cependant, la fermeture du moule telle que prévue dans ce document pose plusieurs problèmes. En particulier, ces secteurs angulaires n'assurent pas une compaction uniforme de la préforme fibreuse, la pression appliquée pouvant varier d'un secteur à l'autre et n'étant pas appliquée uniquement en direction de la préforme fibreuse. En outre, l'étanchéité entre deux secteurs angulaires adjacents peut ne pas être satisfaisante, ce qui réduit la fiabilité du moule lors de l'injection de la résine. Le document WO 2014131992 divulgue un moule d'injection dans lequel deux joints d'étanchéité toriques sont interposés entre les deux parties distinctes du mandrin.

Par conséquent, un besoin existe de disposer d'un moule d'injection qui ne présente pas de problèmes d'étanchéité lors de l'injection de résine et qui assure un compactage uniforme de la préforme fibreuse.

### Objet et résumé de l'invention

La présente invention a donc pour but principal de pallier de tels inconvénients en proposant un moule destiné à être utilisé pour la fabrication d'un carter de soufflante de turbine à gaz en matériau composite comprenant :
- un mandrin sur lequel est destinée à être enroulée une préforme fibreuse de carter de soufflante comprenant une paroi annulaire dont le profil de la surface extérieure correspond à celui de la surface interne du carter à fabriquer et deux flasques latéraux dont les profils correspondent à ceux de brides externes du carter à fabriquer,
- une pluralité de secteurs angulaires de contre-moule assemblés de façon étanche sur le mandrin et destinés à fermer le moule et à compacter une préforme fibreuse enroulée sur le mandrin, et
- une pluralité de clefs de verrouillage configurées pour verrouiller entre eux de façon étanche les secteurs de contre-moule voisins, chaque clef de verrouillage étant fixée sur deux secteurs angulaires de contre-moule voisins.

Le moule selon l'invention est remarquable en ce qu'il permet d'assurer, par le biais des secteurs angulaires de contre-moule assemblés de façon étanche sur le mandrin, un compactage de la préforme fibreuse radialement sur le mandrin, tout en assurant une bonne étanchéité du moule une fois fermé. En effet, les secteurs angulaires de contre-moule sont assemblés directement sur le mandrin d'une part, et verrouillés entre eux par des clefs de verrouillage d'autre part. L'assemblage des secteurs sur le mandrin permet de compacter la préforme fibreuse à une pression déterminée, en assurant également l'étanchéité entre les secteurs et le mandrin. Les clefs de verrouillage assurent quant à elles l'assemblage des secteurs angulaires entre eux de façon étanche. Ainsi, les fonctions de compactage et d'étanchéité entre les secteurs sont dissociées, ce qui augmente la fiabilité globale du moule.

De préférence, le moule comprend en outre des moyens de guidage destinés à guider chaque secteur de contre-moule lors de son assemblage sur le mandrin du moule. De tels moyens de guidage peuvent comprendre une pluralité de doigts s'étendant selon un axe radial à partir d'un flasque latéral du mandrin, chaque doigt coopérant avec une rainure présente sur chaque secteur de contre-moule.

De préférence également, le moule comprend en outre une pluralité de vis de serrage s'étendant selon des axes radiaux et configurés pour fixer les secteurs de contre-moule sur le mandrin du moule.

Dans un exemple de réalisation, le moule peut comprendre six secteurs angulaires et six clefs de verrouillage.

L'invention vise aussi un procédé de fermeture d'un moule d'injection destiné à être utilisé pour la fabrication d'un carter de soufflante de turbine à gaz en matériau composite, le moule comprenant un mandrin sur lequel est destinée à être enroulée une préforme fibreuse de carter de soufflante, le mandrin comprenant une paroi annulaire dont le profil de la surface extérieure correspond à celui de la surface interne du carter à fabriquer et deux flasques latéraux dont les profils correspondent à ceux de brides externes du carter à fabriquer, le moule comprenant en outre une pluralité de secteurs angulaires de contre-moule destinés à fermer le moule et à compacter la préforme fibreuse enroulée sur le mandrin, le procédé comprenant :
a) l'assemblage étanche des secteurs de contre-moule sur le mandrin du moule, et
b) la fixation d'une clef de verrouillage sur deux secteurs angulaires de contre-moule voisins de façon à assurer un verrouillage étanche desdits secteurs angulaires voisins entre eux.

Lorsque le contre-moule comprend au moins trois secteurs angulaires, l'assemblage du troisième secteur angulaire entre le premier et le deuxième secteur déjà en place peut poser problème. En effet, les premier et deuxième secteurs angulaires déjà assemblés compactent la préforme fibreuse, alors que dans l'espace dans lequel sera assemblé le troisième secteur, la préforme fibreuse n'est pas encore compactée. Lorsque le troisième secteur sera assemblé sur le mandrin, il est amené selon une direction radiale. Par conséquent, un pincement de fibres peut apparaître à la jonction entre le premier et le troisième secteur, et, entre le deuxième et le troisième secteur. De tels pincements ne sont pas souhaitables puisqu'ils entraînent des variations du taux de fibres dans la préforme fibreuse en créant notamment des bourrelés, et donc occasionner des défauts dans le carter fabriqué.

A cet effet, le moule peut comprendre au moins trois secteurs de contre-moule, l'étape a) comprenant alors :
- l'assemblage étanche d'un premier et d'un deuxième secteur de contre-moule sur le mandrin du moule en laissant entre eux un espace destiné à accueillir un troisième secteur de contre-moule,
- la fixation temporaire d'au moins une cale de compactage sur le mandrin dans ledit espace destiné à accueillir le troisième secteur de contre-moule, la cale de compactage étant positionnée contre une face longitudinale du premier ou du deuxième secteur de contre-moule et étant destinée à compacter une partie de la préforme.

Une telle cale de compactage compacte une partie de la préforme fibreuse située dans l'espace qui accueillera le troisième secteur angulaire au niveau des extrémités des premier et deuxième secteurs angulaire. Les transitions entre les zones compactées par les premier et deuxième secteurs angulaires, et la zone non compactée, sont déplacées là où sera positionné le troisième secteur angulaire, et non plus à l'interface entre deux secteurs angulaires. Ainsi, les pincements de la préforme fibreuse lors de l'assemblage du troisième secteur sont évités.

Avantageusement, la cale de compactage comprend une face destinée à venir compacter la préforme, la face présentant un profil configuré pour créer une zone de transition de compactage entre une partie de la préforme compactée par un secteur de contre-moule et une partie non compactée de la préforme.

Dans un exemple de réalisation, la face de la cale de compactage destinée à venir compacter la préforme a un profil arrondi au niveau de son extrémité opposée à la face longitudinale du secteur de contre-moule contre laquelle la cale de compactage est positionnée. Un tel profil arrondi permet de ne pas cisailler la préforme lorsqu'elle est compactée par la cale de compactage.

L'invention vise également un procédé de fabrication d'un carter de soufflante de turbine à gaz en matériau composite comprenant : l'enroulement d'une préforme fibreuse sur le mandrin d'un moule tel que celui décrit plus haut, la fermeture du moule par un procédé tel que celui décrit plus haut, l'injection dans le moule d'une résine, et le démoulage du carter de soufflante.

Enfin, l'invention vise encore une turbine à gaz comprenant un carter de soufflante fabriqué par un tel procédé.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique d'un carter de soufflante de turbine à gaz,
- la figure 2 est une vue en perspective d'un moule selon l'invention lorsqu'il est fermé,
- la figure 3 est une vue en coupe transversale du moule de la figure 2,
- la figure 4 illustre le guidage d'un secteur angulaire de contre-moule sur le mandrin,
- la figure 5 montre une cale de compactage assemblée sur le mandrin du moule, et
- les figures 6A et 6B sont des vues en coupe de la cale de compactage de la figure 5 assemblée sur le mandrin du moule.

### Description détaillée de l'invention

L'invention sera décrite ci-après dans le cadre de son application à la fabrication d'un carter de soufflante de moteur aéronautique à turbine à gaz.

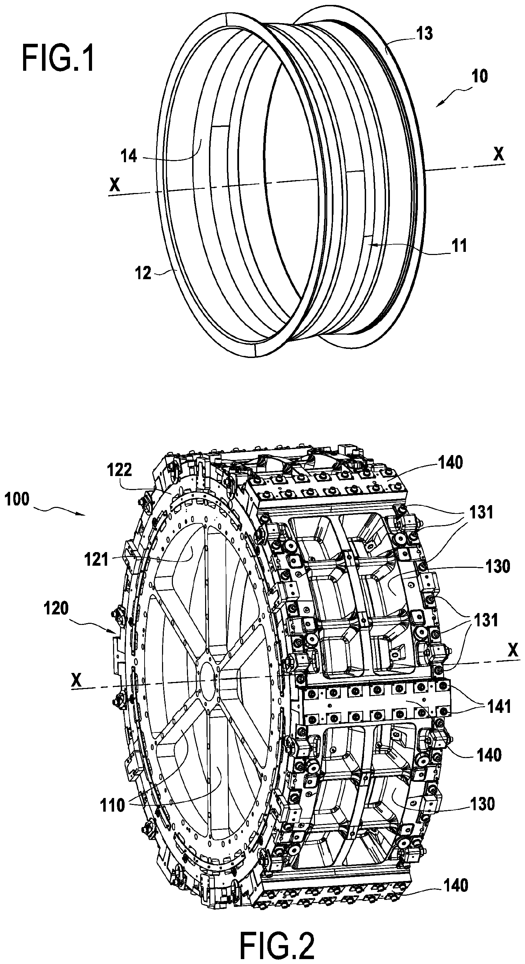

La figure 1 montre une vue en perspective d'un carter de soufflante 10 pouvant être fabriqué en utilisant un moule et un procédé selon l'invention. Un tel carter est centré sur un axe longitudinal X-X et comprend une paroi annulaire 11 délimitée à l'amont par une bride amont 12 et à l'aval par une bride aval 3 (l'amont et l'aval étant définis par rapport au sens d'écoulement du flux gazeux dans la turbine à gaz). La surface interne 14 de la paroi annulaire 11 est destinée à délimiter la veine d'entrée d'air dans la turbine à gaz.

La figure 2 est une vue schématique en perspective d'un moule selon l'invention lorsqu'il est fermé.

Un tel moule peut être utilisé pour l'imprégnation par un procédé du type RTM (« Resin Transfer Molding») d'une préforme fibreuse afin de fabriquer un carter de soufflante 10 tel que celui présenté précédemment. La préforme fibreuse peut être réalisé par tissage tridimensionnel de fibres, par exemple de carbone, verre, aramide ou céramique, et la matrice d'imprégnation peut être en polymère, par exemple époxide, bismaléimide ou polyimimde.

Le moule 100 est monté de façon rotative sur un axe d'entraînement (non représenté) centré sur l'axe X-X, et comprend un mandrin 120. Par la suite, les directions longitudinale, transversale et radiale seront définies par rapport à cet axe X-X, un plan transversal étant un plan perpendiculaire à l'axe longitudinal.

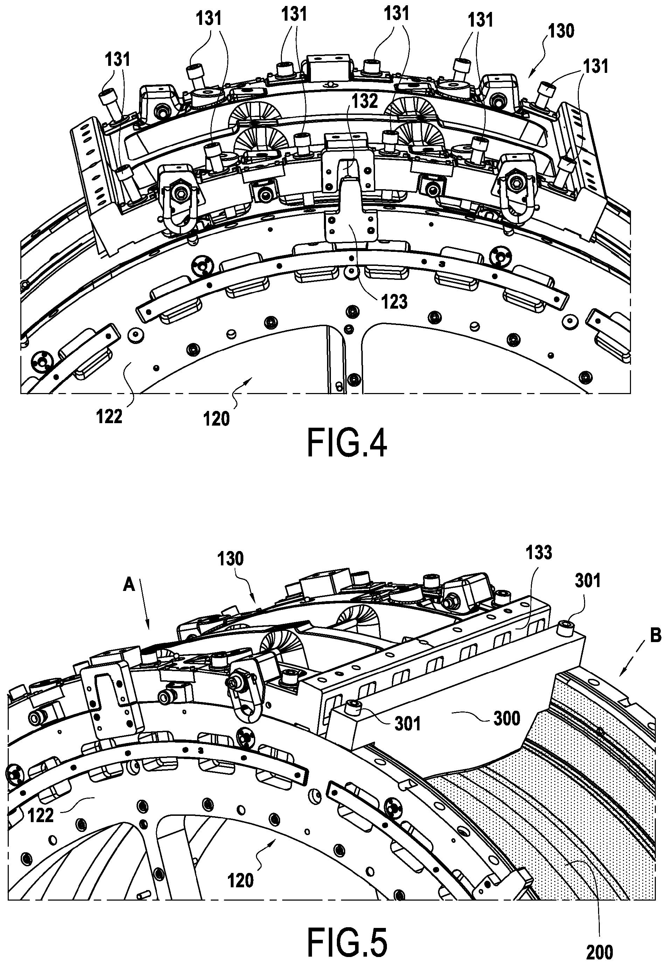

Le mandrin 120 comprend une paroi annulaire 121 prenant la forme d'un fût sur lequel est destinée à être enroulée une préforme fibreuse 200 (figure 5), et deux flasques latéraux 122. Le mandrin 120 est maintenu sur son axe d'entrainement par l'intermédiaire de six rayons 110.

Les flasques 122 forment un appui destiné à recevoir les parties rabattues de la préforme 200 enroulée sur le mandrin 120, et qui sont destinées à former les brides amont 12 et aval 13 du carter de soufflante 10.

Conformément à l'invention, le moule 100 comprend en outre un contre-moule composé de plusieurs secteurs angulaires de contre-moule 130 (ici au nombre de six) assemblés de façon étanche sur le mandrin 120, et verrouillés entre eux de façon étanche par autant de clefs de verrouillage 140.

Les secteurs 130 sont assemblés sur les flasques latéraux 122 par des vis de serrage 131 qui s'étendent selon un axe radial. Les secteurs 130 sont fixés mécaniquement et directement sur le mandrin 120. Ces vis 131 permettent l'assemblage des secteurs 130 sur les flasques 122 et le réglage de la pression de compaction qui est appliquée sur la préforme fibreuse 200. Des joints toriques (non représentés) positionnés sur les flasques 122 assurent l'étanchéité entre les secteurs 130 et le mandrin 120.

Par ailleurs, les secteurs 130 sont verrouillés entre eux par des clefs de verrouillage 140. Une clef 140 est fixée entre deux secteurs 130 voisins par deux rangées de vis 141 s'étendant longitudinalement sur les extrémités de chaque secteur 130. L'assemblage des clefs de verrouillage 140 se fait radialement par l'extérieur, une fois les secteurs 130 assemblés sur le mandrin 120. Dans l'exemple illustré, chaque clef de verrouillage 140 est fixée directement sur deux secteurs 130 voisins.

De la sorte, les clefs assurent un serrage circonférentiel des secteurs 130 entre eux, et une étanchéité entre ces secteurs grâce à des joints d'étanchéité plats (non représentés) positionnés entre les secteurs 130. On notera que les clefs 140 ne jouent aucun rôle dans l'assemblage des secteurs 130 sur le mandrin 120.

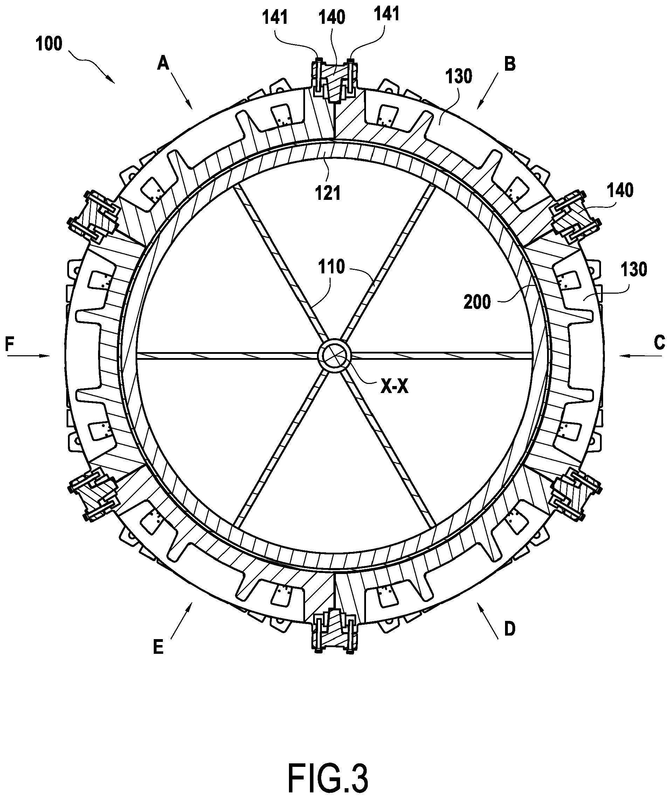

La fabrication d'un carter de soufflante 10 va maintenant être décrite en lien avec les figures 3 à 6B.

Une préforme fibreuse 200 (figure 3) doit tout d'abord être enroulée sur le mandrin 120. Des procédés ont déjà été proposés pour enrouler une préforme fibreuse réalisée par exemple par tissage tridimensionnel autour d'un mandrin tel que celui de l'invention, et ne seront pas décrits plus en détail. On pourra par exemple se référer au document WO 2012/140355 qui propose une machine d'enroulement d'une texture fibreuse sur un mandrin d'imprégnation.

Une fois la préforme 200 enroulée sur le mandrin, les secteurs 130 doivent être assemblés sur le mandrin 120.

La figure 4 montre une étape d'approche d'un secteur 130 sur le mandrin 120. Plus particulièrement, des moyens de guidage 123, 132 sont prévus pour s'assurer que le secteur 130 approche radialement le mandrin et vienne compacter selon une direction radiale la préforme 200 sur le mandrin 120. Ces moyens de guidage comprennent des doigts 123 s'étendant selon un axe radial prévus sur chaque flasque 122, ces doigts 123 étant destinés à coopérer avec des rainures 132 de forme complémentaire à celle des doigts 123 s'étendant également selon un axe radial et prévues centrées sur les faces amont et aval de chaque secteur 130. Dans un mode de réalisation non illustré, les doigts 123 peuvent être présents sur les faces amont et aval de chaque secteur 130, et les rainures 132 peuvent être présentes sur les flasques 122.

Une fois le secteur 130 approché du mandrin et guidé jusqu'à celui-ci à l'aide des doigts 123 et des rainures 132, les vis de serrage 131 sont positionnées pour finaliser l'assemblage étanche du secteur 130 sur le mandrin. La pression de compactage de la préforme 200 peut être contrôlée et maintenue par ces vis de serrage 131. Les vis de serrage 131 sont préférentiellement mises en place dans un certain ordre en commençant par les plus proches du doigt de guidage 123, et en terminant par ceux situés aux extrémités du secteur 130.

En référence à la figure 3, l'assemblage des secteurs 130 sur le mandrin 120 s'effectue dans un certain ordre : on positionne d'abord les secteurs désignés A, C et E, puis les secteurs B, D et F. Le secteur A est quant à lui positionné au niveau de la zone de fin d'enroulement de la préforme. Il est important de monter les secteurs dans cet ordre pour éviter la formation de bourrelés dans la préforme fibreuse 200 au moment de la fermeture du moule.

Selon une disposition avantageuse de l'invention illustrée par la figure 5, avant de mettre en place les derniers secteurs B, D et F, on fixe temporairement deux cales de compactage 300 (une seule est représentée sur la figure 5) sur le mandrin 120 dans l'espace qui sera occupé par les secteurs B, D et F. Ces cales servent principalement à éviter que les trois derniers secteurs B, D et F ne pincent la préforme fibreuse à l'interface entre deux secteurs 130 au moment de leur assemblage sur le mandrin 120.

Par exemple, avant d'assembler le secteur B, une cale de compactage 300 (figure 5) est positionnée temporairement contre la face longitudinale 133 du secteur A, et une autre cale 300 sera positionnée contre la face longitudinale 133 du secteur C (non représenté sur la figure 5). Ces cales 300 sont fixées sur les flasques 122 du mandrin 120 par des vis 301, et sont destinées à compacter la préforme 200 sur une portion non compactée de celle-ci.

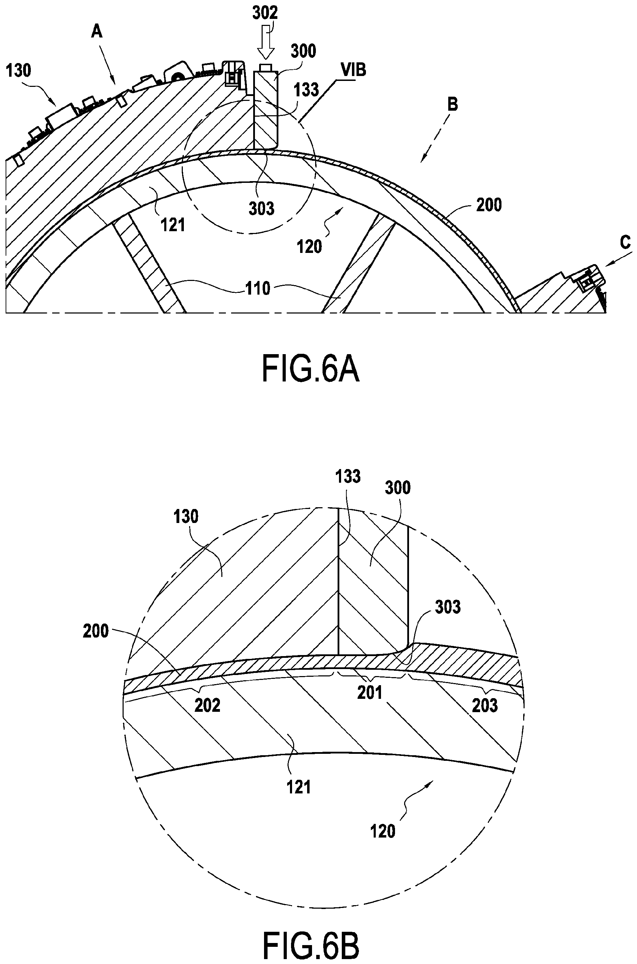

Comme illustré sur la figure 6A, qui est une vue en coupe transversale de la figure 5, chaque cale de compactage 300 est amenée vers le mandrin 120 en longeant la face 133 du secteur 130 voisin, selon la direction indiquée par la flèche 302 (à la différence des secteurs 130 qui sont amenés radialement sur le mandrin 120). Par conséquent, le pincement de la préforme fibreuse 200 est évité, et la transition entre la zone compactée par le secteur voisin et la zone non compactée est déplacée.

La figure 6B montre une vue agrandie de la figure 6A au niveau de la base de la cale de compactage 300.

La cale de compactage 300 comprend une face 303 qui compacte la préforme 200 et présente un profil configuré pour créer une zone de transition de compactage 201 entre une partie 202 compactée par un secteur 130 (ici le secteur A) et une partie non compactée 203 de la préforme (correspondant à l'emplacement du secteur B). De préférence, et afin de créer une zone de transition 201 progressive et de ne pas cisailler la préforme 200 avec une arrête vive, le profil est arrondi au niveau de l'extrémité de la cale opposée à la face 133 du secteur 130 contre laquelle la cale 300 est positionnée. On comprend alors que la préforme 200 est compactée par les cales 300 au niveau de l'interface entre les secteurs A et B, et, B et C. La zone de transition de compactage 201 sera compactée par le secteur B quand il sera assemblé sur le mandrin 120, sans générer de pincement de la préforme 200.

Les cales 300 doivent être maintenues sur le mandrin pendant quelques minutes, et les derniers secteurs B, D et F doivent être assemblés rapidement après le démontage des cales 300 afin que la préforme soit encore compactée au niveau des cales 300 et que tout pincement soit évité.

Une fois tous les secteurs 130 assemblés, les clefs de verrouillage 140 sont mises en place entre les secteurs 130 voisins pour achever la fermeture du moule.

Une résine polymérisable est alors injectée dans le moule 100 par un différentiel de pression (par un procédé du type RTM), et cette dernière est polymérisée (par chauffage ou refroidissement par exemple, selon la nature de la résine utilisée). Le carter de soufflante 10 ainsi fabriqué peut alors être démoulé.

## Revendications

1. Moule (100) destiné à être utilisé pour la fabrication d'un carter de soufflante (10) de turbine à gaz en matériau composite comprenant :
- un mandrin (120) sur lequel est destinée à être enroulée une préforme fibreuse (200) de carter de soufflante comprenant une paroi annulaire (121) dont le profil de la surface extérieure correspond à celui de la surface interne (14) du carter à fabriquer et deux flasques latéraux (122) dont les profils correspondent à ceux de brides externes (12, 13) du carter à fabriquer,
- une pluralité de secteurs angulaires (130) de contre-moule assemblés de façon étanche sur le mandrin et destinés à fermer le moule et à compacter une préforme fibreuse (200) enroulée sur le mandrin, et
- une pluralité de clefs de verrouillage (140) configurées pour verrouiller entre eux de façon étanche les secteurs de contre-moule voisins, chaque clef de verrouillage étant fixée sur deux secteurs angulaires de contre-moule voisins.

2. Moule selon la revendication 1, comprenant en outre des moyens de guidage (123, 132) destinés à guider chaque secteur de contre-moule lors de son assemblage sur le mandrin du moule.

3. Moule selon la revendication 2, dans lequel les moyens de guidage comprennent une pluralité de doigts (123) s'étendant selon un axe radial à partir d'un flasque latéral (122) du mandrin (120), chaque doigt coopérant avec une rainure (132) présente sur chaque secteur de contre-moule, ou dans lequel les moyens de guidage comprennent une pluralité de doigts s'étendant selon un axe radial et étant présents sur les faces amont et aval de chaque secteur de contre-moule (130) chaque doigt coopérant avec une rainure présente sur un flasque latéral (122) du mandrin.

4. Moule selon l'une quelconque des revendications 1 à 3, comprenant en outre une pluralité de vis de serrage (131) s'étendant selon des axes radiaux et configurés pour fixer les secteurs de contre-moule sur le mandrin du moule.

5. Moule selon l'une quelconque des revendications 1 à 4, comprenant six secteurs angulaires (130) et six clefs de verrouillage (140).

6. Procédé de fermeture d'un moule d'injection (100) selon la revendication 1 destiné à être utilisé pour la fabrication d'un carter de soufflante (10) de turbine à gaz en matériau composite, le moule comprenant un mandrin (120) sur lequel est destinée à être enroulée une préforme fibreuse (200) de carter de soufflante, le mandrin comprenant une paroi annulaire (121) dont le profil de la surface extérieure correspond à celui de la surface interne (14) du carter à fabriquer et deux flasques latéraux (122) dont les profils correspondent à ceux de brides externes (11, 12) du carter à fabriquer, le moule comprenant en outre une pluralité de secteurs angulaires (130) de contre-moule destinés à fermer le moule et à compacter la préforme fibreuse enroulée sur le mandrin, le procédé comprenant :
a) l'assemblage étanche des secteurs de contre-moule sur le mandrin du moule, et
b) la fixation d'une clef de verrouillage sur deux secteurs angulaires de contre-moule voisins de façon à assurer un verrouillage étanche desdits secteurs angulaires voisins entre eux.

7. Procédé selon la revendication 6, dans lequel le moule comprend au moins trois secteurs de contre-moule, l'étape a) comprenant :
- l'assemblage étanche d'un premier et d'un deuxième secteur de contre-moule sur le mandrin du moule en laissant entre eux un espace destiné à accueillir un troisième secteur de contre-moule,
- la fixation temporaire d'au moins une cale de compactage (300) sur le mandrin (120) dans ledit espace destiné à accueillir le troisième secteur de contre-moule, la cale de compactage étant positionnée contre une face longitudinale (133) du premier ou du deuxième secteur de contre-moule et étant destinée à compacter une partie (201) de la préforme.

8. Procédé selon la revendication 7, dans lequel la cale de compactage (300) comprend une face (303) destinée à venir compacter la préforme (200), la face présentant un profil configuré pour créer une zone de transition de compactage (201) entre une partie (202) de la préforme compactée par un secteur de contre-moule et une partie non compactée (203) de la préforme.

9. Procédé selon la revendication 8, dans lequel la face (303) de la cale de compactage destinée à venir compacter la préforme a un profil arrondi au niveau de son extrémité opposée à la face longitudinale (133) du secteur de contre-moule (130) contre laquelle la cale de compactage est positionnée.

10. Procédé de fabrication d'un carter de soufflante de turbine à gaz en matériau composite comprenant :
- l'enroulement d'une préforme fibreuse (200) sur le mandrin (120) d'un moule (100) selon l'une quelconque des revendications 1 à 5,
- la fermeture du moule par un procédé selon l'une quelconque des revendications 6 à 9,
- l'injection dans le moule d'une résine, et
- le démoulage du carter de soufflante (10).

11. Procédé de fabrication d'une turbine à gaz comprenant les étapes du procédé de fabrication d'un carter de soufflante (10) de turbine à gaz en matériau composite selon la revendication 10.

## Patentansprüche

1. Form (100) zur Verwendung bei der Herstellung eines Gebläsegehäuses (10) einer Gasturbine aus Verbundwerkstoff, umfassend:
- einen Dorn (120), auf den ein Faservorformling (200) des Gebläsegehäuses gewickelt werden soll, umfassend eine ringförmige Wand (121), deren Außenflächenprofil dem Profil der Innenfläche (14) des herzustellenden Gehäuses entspricht, sowie zwei seitliche Flansche (122), deren Profile denjenigen von Außenflanschen (12, 13) des herzustellenden Gehäuses entsprechen,
- eine Vielzahl von Gegenform-Winkelsektoren (130), die an dem Dorn dicht montiert und dazu bestimmt sind, die Form zu schließen und einen auf den Dorn gewickelten Faservorformling (200) zu verdichten, und
- eine Vielzahl von Verriegelungsschlüsseln (140), die dazu ausgelegt sind, die benachbarten Gegenform-Sektoren dicht untereinander zu verriegeln, wobei jeder Verriegelungsschlüssel an zwei benachbarten Gegenform-Winkelsektoren befestigt ist.

2. Form nach Anspruch 1, ferner umfassend Führungsmittel (123, 132), die dazu bestimmt sind, jeden Gegenform-Sektor bei seiner Montage an dem Dorn der Form zu führen.

3. Form nach Anspruch 2, bei der die Führungsmittel eine Vielzahl von Fingern (123) umfassen, die sich von einem seitlichen Flansch (122) des Dorns (120) ausgehend entlang einer radialen Achse erstrecken, wobei jeder Finger mit einer Nut (132), welche an jedem Gegenform-Sektor vorhanden ist, zusammenwirkt, oder bei der die Führungsmittel eine Vielzahl von Fingern umfassen, die sich entlang einer radialen Achse erstrecken und auf den stromaufwärtigen und stromabwärtigen Seiten eines jeden Gegenform-Sektors (130) vorhanden sind, wobei jeder Finger mit einer an einem seitlichen Flansch (122) des Dorns vorhandenen Nut zusammenwirkt.

4. Form nach einem der Ansprüche 1 bis 3, ferner umfassend eine Vielzahl von Klemmschrauben (131), die sich entlang radialer Achsen erstrecken und dazu ausgelegt sind, die Gegenform-Sektoren an dem Dorn der Form zu befestigen.

5. Form nach einem der Ansprüche 1 bis 4, die sechs Winkelsektoren (130) und sechs Verriegelungsschlüssel (140) umfasst.

6. Verfahren zum Schließen einer Spritzgussform (100) nach Anspruch 1, die zur Verwendung bei der Herstellung eines Gebläsegehäuses (10) einer Gasturbine aus Verbundwerkstoff bestimmt ist, wobei die Form einen Dorn (120) umfasst, auf den ein Faservorformling (200) des Gebläsegehäuses gewickelt werden soll, wobei der Dorn eine ringförmige Wand (121), deren Außenflächenprofil dem Profil der Innenfläche (14) des herzustellenden Gehäuses entspricht, sowie zwei seitliche Flansche (122) umfasst, deren Profile denjenigen von Außenflanschen (12, 13) des herzustellenden Gehäuses entsprechen, wobei die Form ferner eine Vielzahl von Gegenform-Winkelsektoren (130) umfasst, die dazu bestimmt sind, die Form zu schließen und den auf den Dorn gewickelten Faservorformling zu verdichten, wobei das Verfahren umfasst:
a) das dichte Montieren der Gegenform-Sektoren an dem Dorn der Form und
b) das Befestigen eines Verriegelungsschlüssels an zwei benachbarten Gegenform-Winkelsektoren, um ein dichtes Verriegeln der benachbarten Winkelsektoren untereinander sicherzustellen.

7. Verfahren nach Anspruch 6, bei dem die Form wenigstens drei Gegenform-Sektoren umfasst, wobei Schritt a) umfasst:
- das dichte Montieren eines ersten und eines zweiten Gegenform-Sektors an dem Dorn der Form unter Freilassen eines Raumes zwischen ihnen, welcher dazu bestimmt ist, einen dritten Gegenform-Sektor aufzunehmen,
- das vorübergehende Befestigen wenigstens eines Verdichtungskeils (300) an dem Dorn (120) in dem Raum, der zur Aufnahme des dritten Gegenform-Sektors bestimmt ist, wobei der Verdichtungskeil an einer Längsseite (133) des ersten oder des zweiten Gegenform-Sektors positioniert und dazu bestimmt ist, einen Teil (201) des Vorformlings zu verdichten.

8. Verfahren nach Anspruch 7, bei dem der Verdichtungskeil (300) eine Seite (303) umfasst, die dazu bestimmt ist, den Vorformling (200) zu verdichten, wobei die Seite ein Profil aufweist, das dazu ausgelegt ist, einen Verdichtungsübergangsbereich (201) zwischen einem Teil (202) des Vorformlings, der durch einen Gegenform-Sektor verdichtet ist, und einem nicht verdichteten Teil (203) des Vorformlings zu erzeugen.

9. Verfahren nach Anspruch 8, bei dem die Seite (303) des Verdichtungskeils, die dazu bestimmt ist, den Vorformling zu verdichten, im Bereich ihres Endes, das der Längsseite (133) des Gegenform-Sektors (130), an welcher der Verdichtungskeil positioniert ist, gegenüberliegt, ein abgerundetes Profil aufweist.

10. Verfahren zur Herstellung eines Gasturbinen-Gebläsegehäuses aus Verbundwerkstoff, umfassend:
- das Aufwickeln eines Faservorformlings (200) auf den Dorn (120) einer Form (100) nach einem der Ansprüche 1 bis 5,
- das Schließen der Form durch ein Verfahren nach einem der Ansprüche 6 bis 9,
- das Einspritzen eines Harzes in die Form und
- das Ausformen des Gebläsegehäuses (10).

11. Verfahren zur Herstellung einer Gasturbine, welches die Schritte des Verfahrens zur Herstellung eines Gasturbinen-Gebläsegehäuses (10) aus Verbundwerkstoff nach Anspruch 10 umfasst.

## Claims

1. A mold (100) for use in fabricating a gas turbine fan casing (10) out of composite material, the mold comprising:
- a mandrel (120) for having a fan casing fiber preform (200) wound thereon, the mandrel comprising an annular wall (121) with an outside surface of profile corresponding to the profile of the inside surface (14) of the casing that is to be fabricated and two lateral rims (122) of profiles corresponding to the profiles of outer flanges (12, 13) of the casing that is to be fabricated;
- a plurality of mold cover angular sectors (130) that are assembled in leaktight manner on the mandrel and that are to close the mold and to compact the fiber preform (200) wound on the mandrel; and
- a plurality of locking keys (140) configured to lock together in leaktight manner neighboring mold cover sectors, each locking key being fastened on two neighboring mold cover angular sectors.

2. A mold according to claim 1, further comprising guide means (123, 132) for guiding each mold cover sector while it is being assembled on the mandrel of the mold.

3. A mold according to claim 2, wherein the guide means comprise a plurality of fingers (123) extending along radial axes from a lateral rim (122) of the mandrel (120), each finger co-operating with a notch (132) present in each mold cover sector, or wherein the guide means comprise a plurality of fingers extending along radial axes and being present on the upstream and downstream faces of each mold cover angular sector (130), each finger co-operating with a notch present in each lateral rim (122) of the mandrel (120).

4. A mold according to claim 1, further comprising a plurality of clamping screws (131) extending along radial axes and configured to fasten the mold cover sectors on the mandrel of the mold.

5. A mold according to claim 1, having six angular sectors (130) and six locking keys (140).

6. A method of closing an injection mold (100) according to claim 1 for use in fabricating a gas turbine fan casing (10) out of composite material, the mold comprising a mandrel (120) onto which a fan casing fiber preform (200) is to be wound, the mandrel comprising an annular wall (121) having an outside surface of profile that corresponds to the profile of the inside surface (14) of the casing that is to be fabricated and two lateral rims (122) of profiles that correspond to the profiles of outer flanges (12, 13) of the casing that is to be fabricated, the mold further comprising a plurality of mold cover angular sectors (130) for closing the mold and for compacting the fiber preform wound on the mandrel, the method comprising:
a) assembling the mold cover sectors in leaktight manner on the mandrel of the mold; and
b) fastening a locking key on two neighboring mold cover angular sectors so as to lock said neighboring angular sectors together in leaktight manner.

7. A method according to claim 6, wherein the mold has at least three mold cover sectors, and step a) comprises:
- assembling first and second mold cover sectors in leaktight manner on the mandrel of the mold while leaving between them a space that is to receive a third mold cover sector; and
- temporarily fastening at least one compacting spacer (300) on the mandrel (120) in said space that is to receive the third mold cover sector, the compacting spacer being positioned against a longitudinal face (133) of the first or the second mold cover sector and being designed to compact a portion (201) of the preform.

8. A method according to claim 7, wherein the compacting spacer (300) has a face (303) that is designed to compact the preform (200), that face presenting a profile that is configured to create a compacting transition zone (201) between a portion (202) of the preform that is compacted by a mold cover sector and a non-compacted portion (203) of the preform.

9. A method according to claim 8, wherein the face (303) of the compacting spacer that is to compact the preform has a profile that is rounded at its end remote from the longitudinal face (133) of the mold cover sector (130) against which the compacting spacer is positioned.

10. A method of fabricating a gas turbine fan casing out of composite material, the method comprising:
- winding a fiber preform (200) on the mandrel (120) of a mold (100) according to claim 1;
- closing the mold by a method according to claim 6;
- injecting a resin into the mold; and
- unmolding the fan casing (10).

11. A method of fabricating a gas turbine comprising the steps of the method of fabricating a gas turbine fan casing out (10) of composite material according to claim 10.
